# EUROPÄISCHE PATENTSCHRIFT

(11) **EP 0 979 439 B1**
(45) Veröffentlichungstag und Bekanntmachung des Hinweises auf die Patenterteilung: **30.10.2002**
(21) Anmeldenummer: 98924258.1
(22) Anmeldetag: 30.04.1998
(51) Int. Cl.: G03G 15/00

(54) **VERFAHREN UND SCHALTUNG ZUM INITIALISIEREN EINES DRUCKERS ODER KOPIERERS**
PROCESS AND CIRCUIT FOR INITIALISING A PRINTER OR COPYING MACHINE
PROCEDE ET CIRCUIT D'INITIALISATION D'UNE IMPRIMANTE OU PHOTOCOPIEUSE

(30) Priorität: 30.04.1997 DE 19718416
(43) Veröffentlichungstag der Anmeldung: 16.02.2000
(73) Patentinhaber: Océ Printing Systems GmbH, 85586 Poing (DE)
(72) Erfinder: WARBUS, Volker, D-82041 Oberhaching (DE); SCHEIDIG, Karola, D-85652 Pliening (DE)
(74) Vertreter: Schaumburg, Thoenes & Thurn
(86) Internationale Anmeldenummer: EP9802574
(87) Internationale Veröffentlichungsnummer: WO98049606

(56) Entgegenhaltungen:
- EP-A- 0 476 681
- US-A- 5 317 367
- PATENT ABSTRACTS OF JAPAN vol. 018, no. 067 (P-1686), 3.Februar 1994 & JP 05 281809 A (MINOLTA CAMERA CO LTD), 29.Oktober 1993,
- PATENT ABSTRACTS OF JAPAN vol. 012, no. 032 (P-661), 30.Januar 1988 & JP 62 184477 A (RICOH CO LTD), 12.August 1987,

## Beschreibung

Die Erfindung betrifft ein Verfahren zum Initialisieren eines Druckers oder Kopierers nach dem Oberbegriff des Anspruchs 1 sowie eine zur Durchführung des Verfahrens geeignete Schaltung.

Zur Inbetriebnahme elektronischer Drucker oder Kopierer ist es erforderlich, diese zu initialisieren. Dabei werden die verschiedenen Komponenten des Druckers oder Kopierers in definierte Zustände versetzt, um reproduzierbare Druckausgaben in möglichst gleichbleibender Qualität zu erzielen. Bei elektrophotographischen Hochleistungsdrucksystemen sind im Zuge derartiger Initialisierungsvorgänge einige Dutzend Aggregate und Teilaggregate zu initialisieren, beispielsweise Transportmotoren, Spannungsquellen, Wärmefixiereinrichtungen etc.

Aus der WO-A-96/02872 ist ein derartiges elektrophotographisches Hochleistungsdrucksystem mit einer Vielzahl von Aggregaten bekannt. Aus der US-A-5,050,098 und aus der JP-A-62-184477 sind Verfahren zum Initialisieren eines Druckers bzw. eines Kopierers bekannt.

Die Parameter zur Initialisierung eines Druckers oder Kopierers können je nach Bestückung der Aggregate oder auch je nach gewünschten Druckbildern des Anwenders variieren. Bei Hochleistungsdrucksystemen lassen sich im Zuge der Initialisierung z.B. die horizontale Verschiebung des Druckbildes oder der jeweils eingesetzte Tonertyp nach Farbe, Aufzeichnungsdichte oder dergleichen einstellen.

Im Zuge einer Druckerinitialisierung werden bestimmte Initialisierungsparameter aus einem nicht flüchtigen Speicher (z.B. aus einem EPROM oder einem NVRAM) ausgelesen und in einen flüchtigen Arbeitsspeicher einer Gerätesteuerung eingeschrieben. Dabei kann es vorkommen, daß im Zuge der Initialisierung ungültige Daten in den Arbeitsspeicher geschrieben werden, beispielsweise weil Daten aus dem nicht flüchtigen Speicher verloren gegangen oder verfälscht worden sind, oder weil im Zuge der Datenübertragung Fehler auftreten. Wird ein Hochleistungsdrucksystem mit derartigen falschen Initialisierungsparametern betrieben, so treten in der Regel Fehler beim Drukken auf, die u.U. zum Ausfall von Baugruppen oder gar zur Zerstörung komplexer, hochwertiger Aggregate führen.

Beispielsweise könnte ein nicht zulässiger Tonertyp in einem elektrophotographischen Hochleistungsdrucksystem zu einem Defekt in der Entwicklerstation führen.

Bei einem Drucksystem mit einer Vielzahl von Aggregaten ist es erforderlich, im Zuge des Initialisierungsprozesses eine Vielzahl von Daten in einen Arbeitsspeicher zu übernehmen. Wegen der Vielzahl der Daten und der Komplexität der ineinandergreifenden Vorgänge in einem derartigen Drucker kann es im Zuge der Initialisierung häufiger zu Fehlfunktionen kommen, als bei einfacheren Druckern.

Es ist daher Aufgabe der Erfindung, den Initialisierungsprozeß eines komplex aufgebauten Druckers oder Kopierers möglichst sicher zu gestalten, so daß Fehlfunktionen des Drukkers oder Kopierers weitgehend vermieden werden.

Diese Aufgabe wird durch das im Anspruch 1 beschriebene Verfahren und durch die im Anspruch 8 beschriebene Schaltung gelöst.

Erfindungsgemäß werden die in den Arbeitsspeicher der Gerätesteuerung eines Druckers oder Kopierers geladenen Daten überprüft, bevor der Drucker oder Kopierer seinen Betrieb aufnimmt. Dazu werden die Steuerungsdaten in einer einen separaten Controller aufweisenden Einheit mit Vergleichswerten verglichen, welche jeweils einem vorgegebenen, zulässigen Datenbereich entsprechen. Liegt ein Steuerungsdatum außerhalb des für diese Datenart zulässigen Datenbereichs, so wird ein Fehlersignal erzeugt, welches verhindert, daß der Drucker oder Kopierer mit diesem falschen Datum in Betrieb geht.

Vorzugsweise ist eine Einheit vorgesehen, welche im Falle eines falschen Steuerungsdatums bei bestimmten Datensätzen eine Korrektur der falschen Daten vornimmt. Diese Korrektur kann beispielsweise dadurch erfolgen, daß Standardwerte, welche in einem nicht flüchtigen Speicher gespeichert sind, statt der falschen übertragenen Steuerungsdaten in den Arbeitsspeicher der Gerätesteuerung übernommen werden.

In einem bevorzugten Ausführungsbeispiel weist der Drucker oder der Kopierer eine Gerätesteuerung auf, die mit einer Bedienfeldeinheit verbunden ist. Im Zuge des Initialisierungsvorganges werden die Steuerungsdaten von der Gerätesteuerung auf die Bedienfeldeinheit übertragen. Die Bedienfeldeinheit überprüft dann die Steuerungsdaten auf ihre Plausibilität, d.h. darauf, ob die Steuerungsdaten in einem jeweils zulässigen Datenbereich liegen. Wird dabei ein Fehler festgestellt, so ersetzt die Bedienfeldeinheit die falschen Steuerungsdaten durch entsprechende, vorgegebene Standardwerte. Zusätzlich kann eine Fehlermeldung auf einer Ausgabeeinrichtung wie einem Monitor, einem Fehlerprotokoll, einer Fehlerprotokoll-Datei oder dgl. ausgegeben werden.

Bei einer derartigen Anordnung können die Steuerungsdaten, die Vergleichswerte und/oder die Standardwerte jeweils wahlweise direkt mit der Gerätesteuerung oder direkt mit der Bedienfeldeinheit verbunden sein. Sie können auch auf einem gemeinsamen, nicht flüchtigen Speicher abgelegt sein. Schließlich kann es vorteilhaft sein, diese Daten in einem zusätzlichen Speicher zu spiegeln, d.h. die Daten des Drukkers oder Kopierers vor Datenverlust nochmals abzusichern.

Nachfolgend werden einige Ausführungsbeispiele der Erfindung beschrieben. Dabei zeigen:
- **Figur 1:**: eine erste Schaltungsvariante für eine Druckersteuerung
- **Figur 2:**: eine zweite Schaltungsvariante für eine Druckersteuerung
- **Figur 3:**: eine dritte Schaltungsvariante für eine Druckersteuerung und
- **Figur 4:**: eine vierte Schaltungsvariante für eine Druckersteuerung.
- **Figur 5**: zeigt ein Ablaufdiagramm zur Überprüfung der Steuerungsdaten und
- **Figur 6:**: einen Hochleistungsdrucker gemäß dem Stand der Technik.

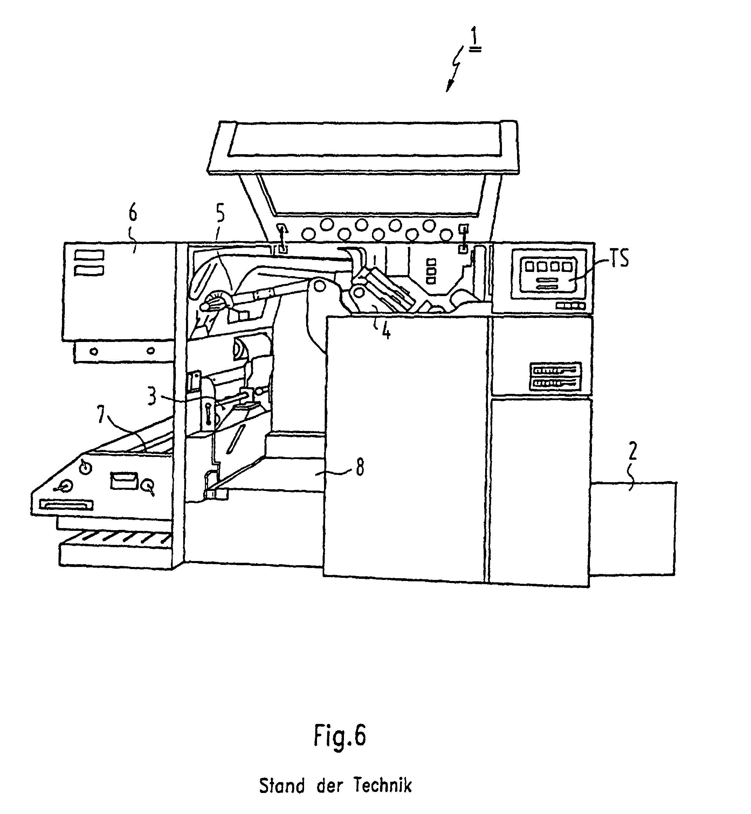

Ein Hochleistungs-Drucker 1, wie er in Figur 6 dargestellt ist, umfaßt einen Papiervorrat 2, von welchem Papier entnommen wird und über eine Papierzuführung 3 zu einem Druckwerk 4 transportiert wird. Dort werden die zu druckenden Informationen über einen elektrophotographischen Prozeß auf das Papier 8 übertragen. Das mit Toner beaufschlagte Papier wird dabei von einer Übergabestation 5 an eine Fixierstation 6 übergeben, in der der Toner durch Wärme auf dem Papier fixiert wird. Schließlich wird das bedruckte Papier auf einer Ablagestation 7 gestapelt und kann zur weiteren Verarbeitung entnommen werden. Die Bedienung des Druckers erfolgt über einen Touch-Screen TS, bei dem die Bedienperson direkt am Bildschirm durch Berühren der Bildschirmoberfläche Informationen eingeben kann.

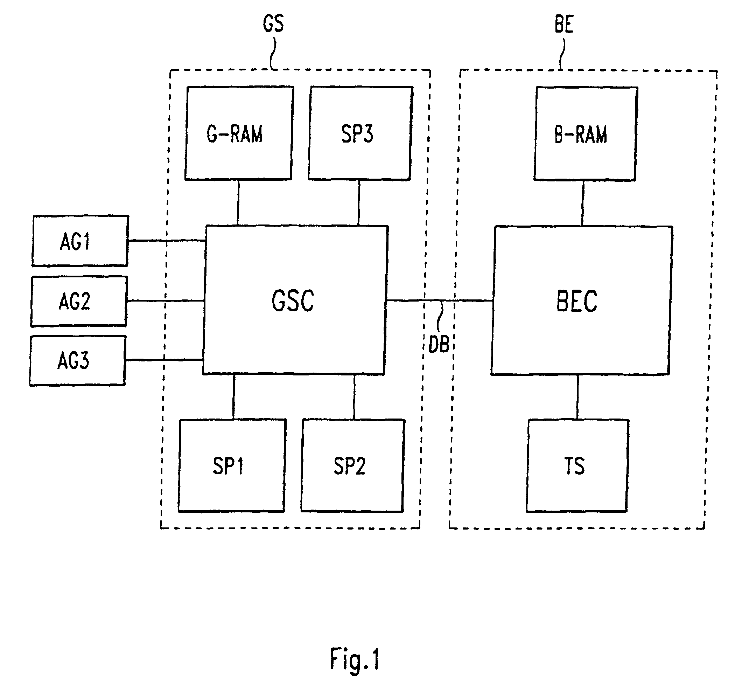

Figur 1 zeigt,elektronische Komponenten zum Initialisieren eines Drucksystems. Kernstück ist hierbei ein Controller GSC einer Gerätesteuerung GS. Er ist mit verschiedenen, elektronischen Aggregatsteuerungen AG1, AG2 und AG3 verbunden, welche jeweils die verschiedenen Aggregate des Druckers ansteuern. Nach dem Einschalten des Druckers wird in den Arbeitsspeicher G-RAM der Gerätesteuerung GS ein Software-Programm geladen. Dieses Programm steuert die weiteren Abläufe der Gerätesteuerung. Das Laden kann von einem der nicht flüchtigen Speicher SP1, SP2 oder SP3 der Gerätesteuerung GS erfolgen. Diese drei Speicher SP1, SP2 und SP3 können räumlich voneinander getrennt angeordnet sein, oder auch verschiedene Speicherbereiche ein- und desselben Speicherelements sein, beispielsweise nicht flüchtige RAMs (sog. non-volatile RAMs bzw. NV-RAMs), E-EPROMS oder auch Festplattenspeicher.

Während oder nach dem Laden des Arbeitsprogramms in den Arbeitsspeicher G-RAM wird vom Controller der Gerätesteuerung GS auch eine Bedienfeldeinheit BE aktiviert. Dazu wird ein Bedienfeld-Softwareprogramm in den Arbeitsspeicher B-RAM der Bedienfeldeinheit BE geladen. Dieses aktiviert wiederum den Touch-Screen TS. Ein Controller BEC der Bedienfeldeinheit BE überwacht die Abläufe innerhalb der Bedienfeldeinheit BE.

Die Datenübertragung zwischen der Gerätesteuerung GS und der Bedienfeldeinheit BE erfolgt über einen Datenbus DB, an dem die beiden Controller GSC und BEC angeschlossen sind.

Im Zuge des Starts der Gerätesteuerung, bei dem das Arbeitsprogramm der Gerätesteuerung GS in den Arbeitsspeicher G-RAM geladen wird, werden auch diejenigen Steuerungsdaten in den Arbeitsspeicher G-RAM geladen, die benötigt werden, um die verschiedenen Aggregatsteuerungen (AG1, AG2 usw.) anzusteuern. Diese Steuerungsdaten werden aus dem Speicher SP1 entnommen. Im Zuge des Starts der Bedienfeldeinheit BE werden die Steuerungsdaten dann vom Arbeitsspeicher G-RAM der Gerätesteuerung GS an den Arbeitsspeicher B-RAM der Bedienfeldeinheit BE übertragen. Die Bedienfeldeinheit BE überprüft anschließend, ob diese Daten jeweils in einem zugelassenen Wertebereich liegen. Dazu entnimmt sie Vergleichswerte aus dem Speicher SP3. Die Vergleichswerte sind dabei Grenzwerte von zulässigen Wertebereichen in den jeweiligen Steuerungsdaten. Stellt nun die Bedienfeldeinheit BE fest, daß ein aus dem Speicher SP1 stammendes Steuerungsdatum außerhalb eines für dieses Datum zulässigen Wertebereiches liegt, dann erzeugt die Bedienfeldeinheit BE ein Fehlersignal. Daraufhin wird versucht, die Daten anhand von Vorgabewerten (default) aus dem Speicher SP2 zu ersetzen und die ersetzten Daten an den Arbeitsspeicher G-RAM der Gerätesteuerung GS zurückzugeben.

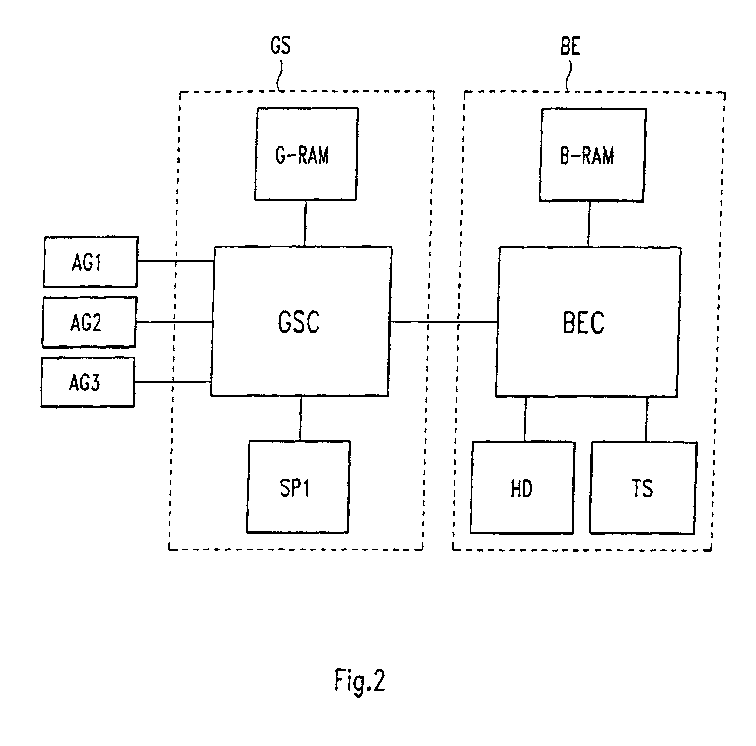

Figur 2 zeigt eine etwas veränderte Ausführungsform der Steuerungseinheit von Fig. 1. Bei der in Figur 2 gezeigten Variante sind die Daten für die Vorgabewerte (default) und für die Vergleichswerte, welche die zulässigen Datenbereiche abgrenzen, in einem nicht flüchtigen Speicher gespeichert, der direkt mit dem Controller BEC der Bedienfeldeinheit BE verbunden ist. Die Bedienfeldeinheit BE ist dadurch ein eigenständiges, von der übrigen Gerätesteuerung GS unabhängiges System. Es kann beispielsweise durch einen PC mit Mikroprozessor, Festplatte, Touch-Screen und Arbeitsspeicher dargestellt werden. Dieser PC ist mit der Gerätesteuerung GS über eine parallele oder serielle Schnittstelle zu verbinden.

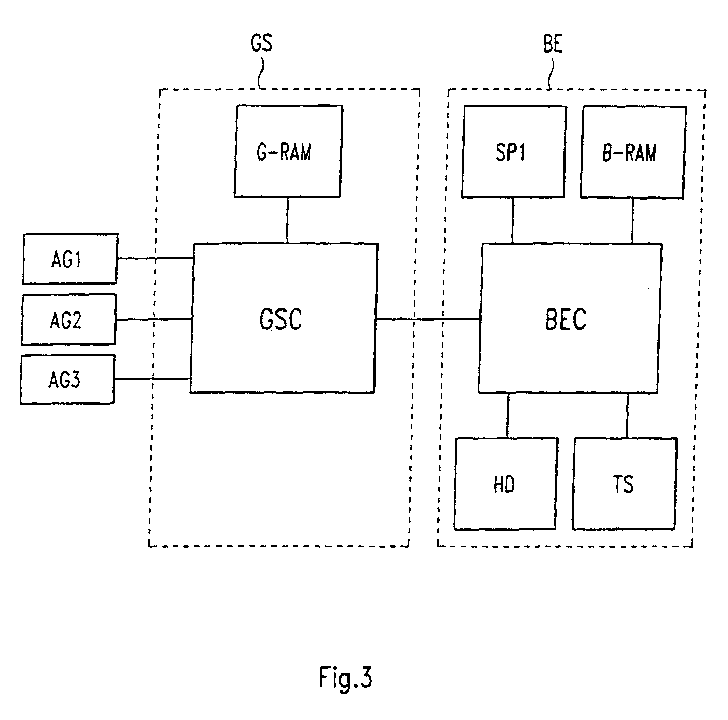

In Figur 3 ist zusätzlich zu der in Figur 2 gezeigten Ausführungsform der Speicher 1 für die Steuerungsdaten in der Bedienfeldeinheit BE angeordnet. Diese Daten werden dann im Zuge der Initialisierung von der Bedienfeldeinheit an die Gerätesteuerung geliefert.

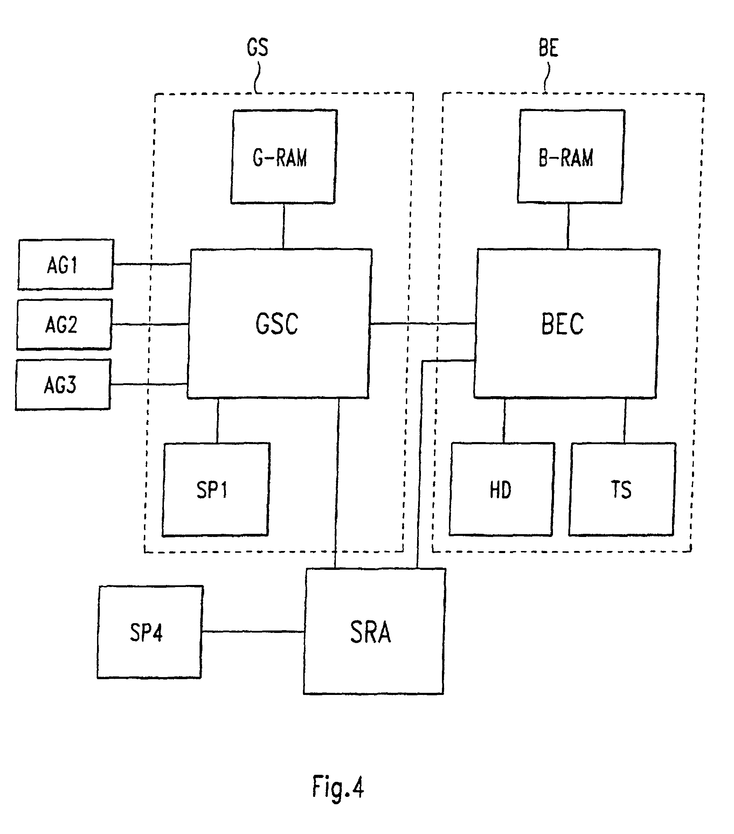

In Figur 4 ist eine weitere Ausführungsform für ein System zum Initialisieren eines Druckers dargestellt. Gerätesteuerung GS und Bedienfeldeinheit BE sind im wesentlichen so verbunden, wie in Figur 2 dargestellt. Hinzu kommt jedoch ein Aggregat SRA, welches sowohl mit der Gerätesteuerung GS als auch mit der Bedienfeldeinheit BE verbunden ist, einen nicht flüchtigen Speicher SP4 aufweist und ein Controller für einen Zeichengenerator ist. Der Speicher SP4 kann als Sicherungsspeicher für Daten verwendet werden, welche in der Gerätesteuerung GS und/oder in der Bedienfeldeinheit BE in den Speichern SP1 bzw. HD abgespeichert sind. Durch diese zusätzliche Sicherung lassen sich die Daten spiegeln, d.h. nochmals eine Überprüfung bzw. ein Datenabgleich durchführen. Dadurch wird bewirkt, daß die in die Gerätesteuerung GS zur Initialisierung der Aggregate AG1 bis AG3 geladenen Daten mit hoher Sicherheit zulässige Werte aufweisen. Insbesondere dadurch, daß die verschiedenen Speicher der Einheiten GS, BE und/oder SRA räumlich getrennt im Drucker untergebracht sind, läßt sich eine hohe Datensicherheit erzielen.

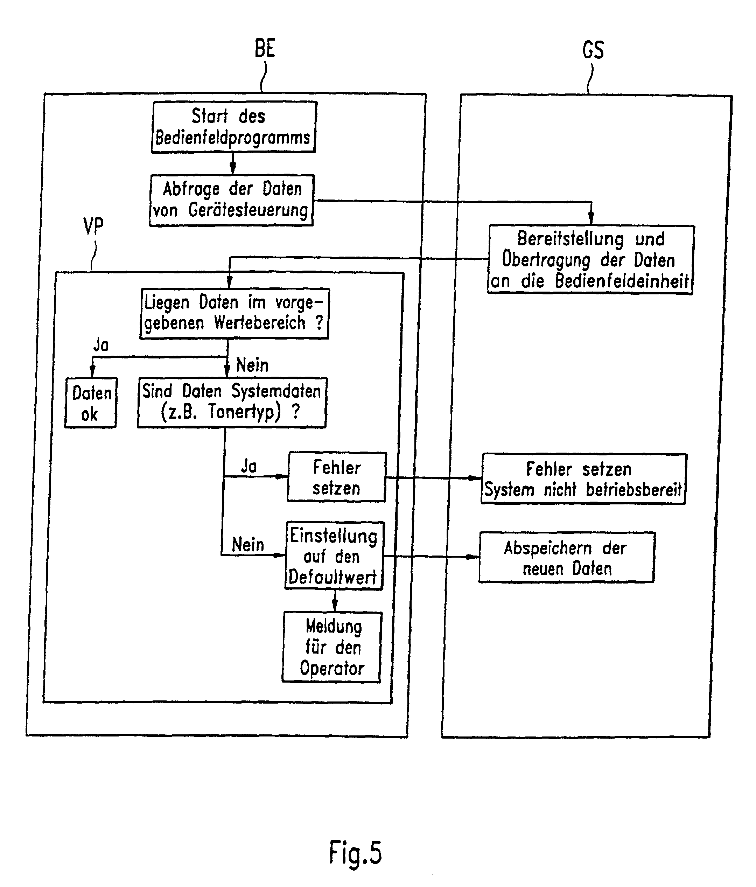

In Figur 5 ist ein Ablaufdiagramm dargestellt, aus dem der Initialisierungsprozeß deutlich wird. Nachdem die Haupt-Gerätesteuerung GS ihr Arbeitsprogramm geladen hat, wird in den Arbeitsspeicher B-RAM der Bedienfeldeinheit BE ein Bedienfeldprogramm geladen. Dieses Programm frägt die Daten der Gerätesteuerung GS ab und nimmt hierzu mit dem Controller GSC der Gerätesteuerung GS Kontakt auf. Der Controller GSC stellt der Bedienfeldeinheit BE die Steuerungsdaten, welche für die verschiedenen Aggregate verwendet werden sollen, zur Verfügung. Eine Vergleichsprozedur VP des Bedienfeldprogramms vergleicht dann, ob die von der Gerätesteuerung GS bereit gestellten Steuerungsdaten im vorgegebenen, zulässigen Wertebereich liegen. Ist dies der Fall, so werden die Daten freigegeben (o.k.). Liegen die Daten jedoch nicht im vorgegebenen, zulässigen Wertebereich, so wird zunächst geprüft, ob die Daten besonders wichtige Systemdaten betreffen. Solche wichtigen Systemdaten, z.B. die Angabe über einen im Drucker vorhandenen Tonertyp, können nicht ohne weiteres ersetzt werden. Deshalb wird in diesen Fällen eine Fehlermeldung erzeugt und auf dem Touch-Screen Bildschirm dargestellt. Darüber hinaus wird an die Gerätesteuerung GS ein Fehlersignal übermittelt, welches verhindert, daß das Gesamtsystem in Betrieb geht. Hierdurch wird zuverlässig verhindert, daß der Drucker mit falschen Systemdaten in Betrieb genommen wird, welche zu einer schwerwiegenden Funktionsstörung oder gar einer Zerstörung von Aggregatkomponenten führen könnten. Zusätzlich kann vorgesehen sein, den Fehler auf einem Fehlerprotokoll oder in einer Historien-Datei des Druckers zu dokumentieren.

Ist z.B. das Datum für einen eingestellten Tonertyp in dem Drucker auf einen nicht zulässigen Wert eingestellt, so setzt die Bedienfeldeinheit einen Fehler, der den Druckbeginn verhindert. Ein Tonertyp kann aufgrund seiner wichtigen Bedeutung nicht automatisch auf einen Standardwert (default) eingestellt werden. Deshalb muß in diesem Fall ein Service-Techniker den richtigen Wert neu einstellen.

Sind die Daten, welche außerhalb des vorgegebenen, zulässigen Wertebereichs dagegen weniger wichtige Daten, die automatisch korrigierbar sind bzw. deren falsche Einstellung die Gesamtfunktion des Druckers beeinträchtigen, so wird ein solches Datum auf einen Standardwert (default) gesetzt. Zusätzlich wird aus dem Fehlersignal eine Meldung für den Bediener (Operator) abgeleitet, aus der er den eingestellten, neuen Wert auf dem Bildschirm erkennen kann. Die neuen Daten werden dann an die Gerätesteuerung, insbesondere in deren Arbeitsspeicher G-RAM übertragen.

Ein Beispiel für einen derartigen, weniger wichtigen Datensatz ist eine Einstellung zur horizontalen Verschiebung eines Druckbildes. Angenommen, eine eingestellte horizontale Verschiebung des Druckbildes hat sich verändert und liegt außerhalb des zulässigen Bereichs, so wird das Druckbild auf einen nicht definierten Bereich gedruckt, möglicherweise sogar außerhalb des Papiers. Ein derartiger Druckjob müßte komplett verworfen werden. Durch eine automatische Einstellung auf einen Vorgabewert (default), beispielsweise auf eine Verschiebung von Null, kann gewährleistet werden, daß das Druckbild in jedem Fall zu Papier gebracht wird. Durch eine Meldung für den Bediener und ggf. eine symbolische Markierung kann die Möglichkeit gegeben werden, diese zu korrigieren. Auch in einem solchen Korrekturfall kann vorgesehen sein, den Fehler und dessen Korrektur in einem Fehlerprotokoll und/oder in einer Historien-Datei des Druckers zu dokumentieren.

Es wurden Ausführungsbeispiele der Erfindung beschrieben. Dabei ist klar, daß jederzeit Abwandlungen angegeben werden können. Beispielsweise können die Vergleichswerte innerhalb der Bedienfeldeinheit von einem nicht flüchtigen RAM-Speicher (NV-RAM) statt aus einem Festplattenspeicher zur Verfügung gestellt werden. Die Erfindung kann auch vorteilhaft für Kopierer und Kopiersysteme, Hochleistungsdrucker und Plotter verwendet werden. Bei den Geräten können sowohl Einzelblätter oder Papier in Rollenform verarbeitet werden.

### Bezugszeichenliste

- AG1: Aggregatsteuerung 1
- AG2: Aggregatsteuerung 2
- AG3: Aggregatsteuerung 3
- BE: Bedienfeld
- BEC: Controller der Bedienfeldeinheit
- B-RAM: Arbeitsspeicher der Bedienfeldeinheit
- DB: Datenbus
- G-RAM: Arbeitsspeicher der Gerätesteuerung
- GS: Gerätesteuerung
- GSC: Controller der Gerätesteuerung
- HD: Festplatte
- SP1: Speicher für Steuerungsdaten
- SP2: Speicher für Default-Werte
- SP3: Speicher für Vergleichswerte
- SP4: Speicher für Sicherungskopien
- SRA: Controller für Zeichengenerator
- TS: Touch Screen
- VP: Vergleichsprozedur
- 1: Hochleistungsdrucker
- 2: Papiervorrat
- 3: Papierzuführung
- 4: Druckwerk
- 5: Übergabestation
- 6: Fixierstation
- 7: Ablagestation
- 8: Papier

## Patentansprüche

1. Verfahren zum Initialisieren eines Druckers oder Kopierers, bei dem Steuerungsdaten in einen Arbeitsspeicher (G-RAM) einer Gerätesteuerung (GS) geladen werden, welche einen Gerätesteuerungs-Controller (GSC) aufweist, **dadurch gekennzeichnet, daß**
(a) die Steuerungsdaten von der Gerätesteuerung (GS) in eine Vergleichseinrichtung (BE) übertragen werden, die einen Speicher (B-RAM, HD) mit Vergleichswerten enthält, welche jeweils einem vorgegebenen, zulässigen Datenbereich der Steuerungsdaten entsprechen und
(b) die Vergleichseinrichtung (BE) in einem eigenen Controller (BEC) die Steuerungsdaten mit den Vergleichswerten vergleicht und ein Fehlersignal erzeugt, wenn ein Steuerungsdatum außerhalb des zulässigen Datenbereichs liegt.

2. Verfahren nach Anspruch 1, **dadurch gekennzeichnet, daß** die Vergleichseinrichtung eine Bedienfeldeinheit (BE) ist.

3. Verfahren nach Anspruch 1 oder 2, **dadurch gekennzeichnet, daß** die Vergleichswerte in einem nicht flüchtigen Datenspeicher (HD) der Bedienfeldeinheit (BE) gespeichert sind.

4. Verfahren nach einem der Ansprüche 1 bis 3, **dadurch gekennzeichnet, daß** das Fehlersignal von der Bedienfeldeinheit (BE) erzeugt wird, und daß die Bedienfeldeinheit (BE) im Fehlerfall vorgegebene, im zulässigen Datenbereich liegende Steuerungsdaten an die Gerätesteuerung (GS) zurückgibt.

5. Verfahren nach einem der vorhergehenden Ansprüche, **dadurch gekennzeichnet, daß** den Steuerungsdaten jeweils Kennungen zugeordnet sind,nach denen im Fehlerfall entschieden wird, ob ein außerhalb des zulässigen Datenbereichs liegendes Steuerungsdatum automatisch durch einen Vorgabewert ersetzt wird oder nur das Fehlersignal ausgegeben wird.

6. Verfahren nach einem der vorhergehenden Ansprüche, **dadurch gekennzeichnet, daß** ein Signal zum Blockieren des Druckvorgangs abgegeben wird, wenn ein bestimmtes, für den Druckvorgang als wichtig eingestuftes Steuerungsdatum außerhalb des jeweils zulässigen Datenbereichs liegt.

7. Verfahren nach einem der vorhergehenden Ansprüche, **dadurch gekennzeichnet, daß** als Drucker ein Hochleistungsdrucker verwendet wird.

8. Schaltung zum Initialisieren eines Drucksystems oder eines Kopiersystems, bei dem Steuerungsdaten in einen flüchtigen Arbeitsspeicher (G-RAM) einer Gerätesteuerung (GS) geladen werden, die einen Gerätesteuerungs-Controller (GSC) enthält, **gekennzeichnet durch** einen Speicher (SP3) für Vergleichswerte und **durch** eine mit der Gerätesteuerung (GS) verbundene Einrichtung (BE) zum Vergleichen der Steuerungsdaten mit den Vergleichswerten, die einen eigenen Controller (BEC) aufweist und ein Fehlersignal erzeugt, wenn Steuerungsdaten außerhalb eines **durch** die Vergleichswerte vorgegebenen, zulässigen Datenbereichs liegen.

9. Schaltung nach Anspruch 8, **dadurch gekennzeichnet, daß** die Einrichtung (BE) zum Vergleichen der Steuerungsdaten mit den Vergleichswerten eine Bedienfeldeinheit (BE) ist, die einen nicht flüchtigen Speicher (HD) umfaßt, in dem die Vergleichswerte abgespeichert sind.

10. Schaltung nach Anspruch 9, **dadurch gekennzeichnet, daß** die Gerätesteuerung (GS) einen nicht flüchtigen Speicher (SP1) für die Steuerungsdaten enthält, daß der flüchtige Arbeitsspeicher (G-RAM) der Gerätesteuerung (GS) Steuerungsdaten vom nicht flüchtigen Speicher (SP1) aufnimmt und daß die Bedienfeldeinheit (BE) einen flüchtigen Arbeitsspeicher (B-RAM) zur Übernahme der Daten vom Arbeitsspeicher (G-RAM) der Gerätesteuerung (GS) sowie von ihrem nicht flüchtigen Speicher (HD) umfaßt.

11. Schaltung nach einem der Ansprüche 8 bis 10, **gekennzeichnet durch** eine mit der Gerätesteuerung (GS) und der Bedienfeldeinheit (BE) verbundenen Speicher (SP4), in dem sowohl die im nicht flüchtigen Speicher der Gerätesteuerung (GS) enthaltenen Steuerungsdaten als auch die im nicht flüchtigen Speicher (HD) gespeicherten Vergleichswerte gespiegelt sind.

12. Schaltung nach einem der Ansprüche 8 bis 11, **dadurch gekennzeichnet, daß** als Drucksystem ein Hochleistungsdrucksystem verwendet wird.

## Claims

1. Method for initialising a printer or copier, wherein control data are loaded into a main memory (G-RAM) of a device controller (GS) that includes a device controller-controller (GSC), **characterized in that**
(a) the control data are transmitted from the device controller (GS) into a comparison apparatus (BE) that contains a memory (B-RAM, HD) with comparison values that respectively correspond to a predetermined, allowable data range of the control data, and
(b) the comparison apparatus (BE) compares the control data to the comparison values in a separate controller (BEC) and generates an error signal when a control datum lies outside the allowable data range.

2. Method according to claim 1, **characterized in that** the comparison apparatus is a control panel unit (BE).

3. Method according to claim 1 or 2, **characterized in that** the comparison values are stored in a non-volatile data memory (HD) of the control panel unit (BE).

4. Method according to one of the claims 1 to 3, **characterized in that** the error signal is generated by the control panel unit (BE), and **in that** the control panel unit (BE) returns predetermined control data lying in the allowable data range to the device controller (GS) in case of error.

5. Method according to one of the preceding claims, **characterized in that** respective identifiers are allocated to the control data, according to which identifiers a decision is made in case of error whether a control datum lying outside the allowable data range is automatically replaced by a default value or only the error signal is output.

6. Method according to one of the preceding claims, **characterized in that** a signal for blocking the printing process is output when a specific control datum classified as important for the printing process lies outside the respective allowed data range.

7. Method according to one of the preceding claims, **characterized in that** a high-performance printer is used as a printer.

8. Circuit for initialising a printing system or a copying system, wherein control data are loaded into a volatile main memory (G-RAM) of a device controller (GS) that contains a device controller-controller (GSC) **characterized by** a memory (SP3) for comparison values and by an apparatus (BE) connected to the device controller (GS) for comparing the control data to the comparison values, said apparatus having a separate controller (BEC) and generates an error signal when control data lie outside an allowable data range prescribed by the comparison values.

9. Circuit according to claim 8, **characterized in that** the apparatus (BE) for comparing the control data to the comparison values is a control panel unit (BE) that comprises a non-volatile memory (HD) in which the comparison values are stored.

10. Circuit according to claim 9, **characterized in that** the device controller (GS) includes a non-volatile memory (SP1) for the control data, **in that** the volatile main memory (G-RAM) of the device controller (GS) accepts control data from the non-volatile memory (SP1) and **in that** the control panel unit (BE) comprises a volatile main memory (B-RAM) for the acceptance of the data from the main memory (G-RAM) of the device controller (GS) as well as from its non-volatile memory (HD).

11. Circuit according to one of the claims 8 to 10, **characterized by** a memory (SP4) connected to the device controller (GS) and to the control panel unit (BE), in which both the control data contained in the non-volatile memory of the device controller (GS) as well as the comparison values stored in the non-volatile memory (HD) are mirrored.

12. Circuit according to one of the claims 8 to 11, **characterized in that** a high-performance printing system is employed as a printing system.

## Revendications

1. Procédé d'initialisation d'un appareil d'impression ou d'un copieur, dans lequel des données de commande sont stockées dans une mémoire de travail (G-RAM) d'une commande d'appareil (GS), laquelle comporte un contrôleur de commande d'appareil (GSC), **caractérisé en ce que** :
(a) les données de commande sont transférées de la commande d'appareil (GS) dans un dispositif de comparaison (BE) qui comporte une mémoire (B-RAM, HD) contenant des valeurs de comparaison qui correspondent chacune à une zone de données prédéterminée autorisée des données de commande, et
(b) le dispositif de comparaison (BE) compare dans un contrôleur propre (BEC) les données de commande aux valeurs de comparaison, et génère un signal d'erreur lorsqu'une donnée de commande se trouve hors de la zone de données autorisée.

2. Procédé selon la revendication 1, **caractérisé en ce que** le dispositif de comparaison est une unité d'interface opérateur (BE).

3. Procédé selon la revendication 1 ou 2, **caractérisé en ce que** les valeurs de comparaison sont mémorisées dans une mémoire de données non volatile (HD) de l'unité d'interface opérateur (BE).

4. Procédé selon l'une des revendications 1 à 3, **caractérisé en ce que** le signal d'erreur est généré par l'unité d'interface opérateur (BE), et **en ce que** l'unité d'interface opérateur (BE) renvoie en cas d'erreur à la commande d'appareil (GS) des données prédéterminées se trouvant dans la zone de données autorisée.

5. Procédé selon l'une des revendications précédentes, **caractérisé en ce qu'**il est associé à chaque donnée de commande un code indiquant, en cas d'erreur, si une donnée de commande se trouvant hors de la zone de données autorisée est remplacée par une valeur déterminée, ou s'il n'est délivré que le signal d'erreur.

6. Procédé selon l'une des revendications précédentes, **caractérisé en ce qu'**un signal est délivré en vue de bloquer le processus d'impression lorsqu'une donnée de commande déterminée, considérée comme importante pour le processus d'impression, se trouve hors de la zone de données à chaque fois autorisée.

7. Procédé selon l'une des revendications précédentes, **caractérisé en ce que** l'appareil d'impression utilisé est un appareil d'impression à grande vitesse.

8. Circuit d'initialisation d'un système d'impression ou d'un système de copie dans lequel des données de commande sont stockées dans une mémoire volatile (G-RAM) d'une commande d'appareil (GS) qui comporte un contrôleur de commande d'appareil (GSC), **caractérisé par** une mémoire (SP3) pour valeurs de comparaison, et par un dispositif (BE) relié à la commande d'appareil (GS) en vue de comparer les données de commande aux valeurs de comparaison, lequel dispositif comporte un contrôleur propre (BEC), et génère un signal d'erreur lorsque des données de commande se trouvent hors d'une zone autorisée prédéterminée par les valeurs de comparaison.

9. Circuit selon la revendication 8, **caractérisé en ce que** le dispositif (BE) destiné à comparer les données de commande aux valeurs de comparaison est une unité d'interface opérateur (BE) qui comporte une mémoire non volatile (HD) dans laquelle sont mémorisées les valeurs de comparaison.

10. Circuit selon la revendication 9, **caractérisé en ce que** la commande d'appareil (GS) contient une mémoire non volatile (SP1) pour les données de commande, **en ce que** la mémoire de travail volatile (G-RAM) de la commande d'appareil (GS) reçoit des données de commande de la mémoire non volatile (SP1), et **en ce que** l'unité d'interface opérateur (BE) comporte une mémoire de travail volatile (B-RAM) destinée à recevoir les données de la mémoire de travail (G-RAM) de la commande d'appareil (GS) ainsi que de sa mémoire non volatile (HD).

11. Circuit selon l'une des revendications 8 à 10, **caractérisé par** une mémoire (SP4), reliée à une commande d'appareil (GS) et à l'unité d'interface opérateur (BE), dans laquelle aussi bien les données de commande contenues dans la mémoire non volatile de la commande d'appareil (GS) que les valeurs de comparaison mémorisées dans la mémoire non volatile (HD) sont sauvegardées en double.

12. Circuit selon l'une des revendications 8 à 11, **caractérisé en ce que** le système d'impression utilisé est un système d'impression à grande vitesse.
